# EUROPEAN PATENT SPECIFICATION

(11) **EP 2 641 410 B1**
(45) Date of publication and mention of the grant of the patent: **22.07.2020**
(21) Application number: 11808269.2
(22) Date of filing: 17.11.2011
(51) Int. Cl.: H04W 8/12

(54) **AVOID ACCIDENTAL ROAMING BY TRIGGERING A NETWORK RE-ATTACHMENT PROCEDURE**
VERMEIDUNG VON UNBEABSICHTIGTEM ROAMING DURCH AUSLÖSUNG EINES NETZWIEDERVERBINDUNGSVERFAHRENS
ÉVITEMENT D'UNE ITINÉRANCE ACCIDENTELLE AU MOYEN DU DÉCLENCHEMENT D'UNE PROCÉDURE DE RÉATTACHEMENT À UN RÉSEAU

(30) Priority: 17.11.2010 GB 201019436
(43) Date of publication of application: 25.09.2013
(73) Proprietor: Mobileum UK Limited, Bristol, BS32 4LB (GB)
(72) Inventor: Edwards, Dave, Bristol BS32 4LB (GB)
(74) Representative: Haseltine Lake Kempner LLP
(86) International application number: PCT/GB2011/052247
(87) International publication number: WO 2012/066337

(56) References cited:
- WO-A1-2008/087251
- WO-A2-2004/014101
- US-A1- 2006 135 160
- O2: "TSG-SA WG1 Network Selection Workshop; NSW-060021; Techniques to mitigate border area problems", 3GPP DRAFT; NSW-060021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Amsterdam, the Netherlands; 20060124, 25 January 2006 (2006-01-25), pages 1-1, XP050440835, [retrieved on 2006-01-25]

## Description

### Technical Field of the Invention

The invention relates to mobile devices that are attached to a network other than the home network of the mobile device, and in particular relates to a procedure for initiating a network registration procedure in such a mobile device.

### Background to the Invention

Radio waves do not respect country borders. As a result, it is entirely possible for a mobile subscriber who lives near a border between two countries to be using their mobile device at home (in their home country), but actually be connected to a foreign network in the neighbouring country as if they were travelling abroad (i.e. they are considered to be roaming).

The mobile device may register with a foreign network even though coverage from the home network is actually still available. Once the mobile device has registered with the foreign network, it can sometimes take a long time for the mobile device to re-register with the home network. This results in unreasonable roaming costs for the mobile subscriber and operator, particularly if the subscriber has not in fact left their home country.

For a legitimate outbound mobile device (i.e. one that is crossing the border and that will need to roam to a foreign network in order to maintain service), this can mean that roaming costs are increased, as the mobile device may register with the foreign network earlier than necessary.

A similar problem occurs for an inbound roaming mobile device, in that the mobile device can stay connected to the foreign network for some time after they have returned to their home country (and the coverage of their home network). Again, this results in unnecessary roaming charges for both the subscriber and the home network operator.

Each of these scenarios can lead to a considerable revenue loss for the home network operator and an increase in customer complaints.

These problems are particularly significant in areas where there is a land border between two countries, typically meaning that there is no clear demarcation between service areas provided by the home network and the foreign network. It is often the case that the coverage of one or more of these networks will extend into the geographic area of the other country.

Moreover, it will be appreciated that these problems are not necessarily restricted to international borders, as similar problems can occur within a single country, particularly when there are gaps in the coverage offered by a specific network operator (for example in France where the government requires that individual network operators provide coverage in sparsely populated areas). Here, a mobile device may lose the coverage of their home network, and they may roam to the network of another operator. Conventionally, a roaming mobile device performs a search for a signal from the home network of the mobile device (or a signal from a network that is higher in a list of preferred networks stored in the mobile device than the current serving network), and if a signal from a suitable network is found, the mobile device registers with that network. However, this search is carried out periodically, which means that the mobile device can be within the coverage of the home network or a more preferred roaming partner network for some time before the registration procedure takes place.

Therefore there is a need for an alternative procedure that can trigger or initiate a network registration or attachment procedure in a roaming mobile device so that the mobile device can be moved to the home network (or a more preferred network) more quickly than conventional techniques allow.

WO2008/087251 shows the control of a connection to a network by a mobile subscription, US 2006/0135160 shows a border roaming gateway, and the document "Techniques to mitigate border area problems" by O2 discusses two mechanisms that can be used to mitigate the problem of accidentally roaming into a foreign network when in border areas.

### Summary of the Invention

The invention is defined by the subject-matter of the independent claims. Preferred embodiments are set out in the dependent claims.

According to a first aspect of the invention, there is provided a method of operating a mobile device that is attached to a network other than the home network of the mobile device according to the subject-matter defined in claim 1.

In a preferred embodiment, the signal sent from the home network to the VLR in said other network is a Cancel Location signal.

In some embodiments, the signal sent from the home network to the VLR in said other network is sent by a network interface function in the home network.

In some embodiments, the request for a service or session comprises a request to send an SMS or MMS message, make a voice or video call, or start a data or USSD session.

In an advantageous embodiment, the mobile device uses information from a previous attachment to the home network in the network reattachment procedure. The information can comprise at least one of a TMSI or cipher keys.

In some embodiments, the method further comprises, prior to the step of sending a second signal, the step of determining whether the mobile device is in a part of said other network where there may be coverage from the home network.

Preferably, the step of determining comprises the mobile device comparing the location of the mobile device to a set of locations in said other network in which there may be coverage from the home network.

Preferably, the step of comparing comprises the mobile device comparing an identifier of a cell in said other network with which the mobile device is communicating to a set of identifiers of cells in said other network in which there may be coverage from the home network.

In some embodiments, if it is determined that the mobile device is in a part of said other network where there may be coverage from the home network, the method comprises sending the first signal from the mobile device to the home network indicating that the mobile device is in a part of said other network where there may be coverage from the home network.

Preferably, the first signal sent from the mobile device to the home network is sent as an SMS message or as part of a USSD session.

In preferred embodiments, the step of determining whether the mobile device is in a part of said other network where there may be coverage from the home network is performed in the event that a user of the mobile device wants to use a service or start a session. The service or session that the user wants to use or start may comprise sending an SMS or MMS message, making a voice or video call or starting a data session.

In preferred embodiments, if it is determined that the mobile device is in a part of said other network where there may be coverage from the home network and a call is received at the home network for the mobile device, the method further comprises the step of suspending the processing of the call in the home network; and sending the first signal from the home network to the mobile device indicating that the network reattachment procedure is to be started.

Preferably, the method further comprises the step of resuming the processing of the call in the home network after the mobile device performs the network reattachment procedure.

Preferably, the mobile device allows a second time period to elapse after receiving the first signal from the home network indicating that the network reattachment procedure is to be started before sending the request for a service or session to said other network. The first signal from the home network to the mobile device may be sent as an SMS message or as part of a USSD session.

According to a second aspect of the invention, there is provided a method of initiating a network reattachment procedure by a mobile device according to the subject-matter defined in claim 2.

In some embodiments, the request for a service or session comprises a request to send an SMS or MMS message, make a voice or video call, or start a data or USSD session.

In an advantageous embodiment, the mobile device uses information from a previous attachment to the home network in the network reattachment procedure. The information can comprise at least one of a TMSI or cipher keys.

In some embodiments, the method further comprises the step of determining whether the mobile device is in a part of said other network where there may be coverage from the home network.

Preferably, the step of determining comprises comparing the location of the mobile device to a set of locations in said other network in which there may be coverage from the home network.

Preferably, the step of comparing comprises comparing an identifier of a cell in said other network with which the mobile device is communicating to a set of identifiers of cells in said other network in which there may be coverage from the home network.

In some embodiments, if the mobile device determines that it is in a part of said other network where there may be coverage from the home network, the method comprises sending the first signal from the mobile device to the home network indicating that the mobile device is in a part of said other network where there may be coverage from the home network.

Preferably, the first signal sent from the mobile device to the home network is sent as an SMS message or as part of a USSD session.

In preferred embodiments, the step of determining whether the mobile device is in a part of said other network where there may be coverage from the home network is performed in the event that a user of the mobile device wants to use a service or start a session. The service or session that the user wants to use or start may comprise sending an SMS or MMS message, making a voice or video call or starting a data session.

According to a third aspect of the invention, there is provided a computer program product comprising computer readable code that, when executed by a mobile device or a processor within a SIM or USIM in a mobile device, is configured to cause the mobile device or processor to perform the steps in the method described in the preceding paragraphs.

According to a fourth aspect of the invention, there is provided a mobile device for use in a network according to the subject-matter defined in claim 15.

In some embodiments, the request for a service or session comprises a request to send an SMS or MMS message, make a voice or video call, or start a data or USSD session.

In an advantageous embodiment, the mobile device is configured to use information from a previous attachment to the home network in the network attachment procedure. The information can comprise at least one of a TMSI or cipher keys.

In some embodiments, the mobile device is configured to determine whether the mobile device is in a part of said other network where there may be coverage from the home network.

Preferably, the mobile device is configured to determine whether the mobile device is in a part of said other network where there may be coverage from the home network by comparing the location of the mobile device to a set of locations in said other network in which there may be coverage from the home network.

Preferably, the mobile device is configured to compare an identifier of a cell in said other network with which the mobile device is communicating to a set of identifiers of cells in said other network in which there may be coverage from the home network.

In some embodiments, if the mobile device determines that it is in a part of said other network where there may be coverage from the home network, the mobile device is configured to send the first signal from the mobile device to the home network indicating that the mobile device is in a part of said other network where there may be coverage from the home network.

Preferably, the mobile device is configured to send the first signal to the home network as an SMS message or as part of a USSD session.

In preferred embodiments, the mobile device is configured to determine whether it is in a part of said other network where there may be coverage from the home network in the event that a user of the mobile device wants to use a service or start a session. The service or session that the user wants to use or start may comprise sending an SMS or MMS message, making a voice or video call or starting a data session.

According to a fifth aspect of the invention, there is provided a system according to the subject-matter defined in claim 16.

These solutions enable the operator of the home network to reduce the length of time that their mobile subscribers are roaming, and will also enable the home network to recapture their returning roaming subscribers much sooner. They also allow the mobile device to attempt to reattach to the home network in the event that there is an incoming call or the mobile device wants to place a call, which can avoid roaming charges for the subscriber. Furthermore, if coverage from the home network is not available, the procedure according to the invention can be used to try and move a roaming mobile subscriber to a network that is higher in a list of preferred networks stored in the mobile device than the current serving network.

### Brief Description of the Drawings

The invention will now be described, by way of example only, with reference to the following drawings, in which:
Figure 1 illustrates the coverage of a home network and a foreign network in a border region and selected components in the home network and foreign network;
Figure 2 is a block diagram of a mobile device;
Figure 3 is a flow chart illustrating a method of initiating a network attachment procedure according to the invention;
Figure 4 is an illustration of a probe device and part of the home and foreign network architectures of Figure 1;
Figure 5 is a signaling diagram illustrating the method of Figure 3 in a first specific embodiment; and
Figure 6 is a signaling diagram illustrating the method of Figure 3 in a second specific embodiment of the invention.

### Detailed Description of the Preferred Embodiments

Although the invention will be described with reference to a GSM, or GSM-based network, it will be appreciated by those skilled in the art that the invention can be applied to other types of network.

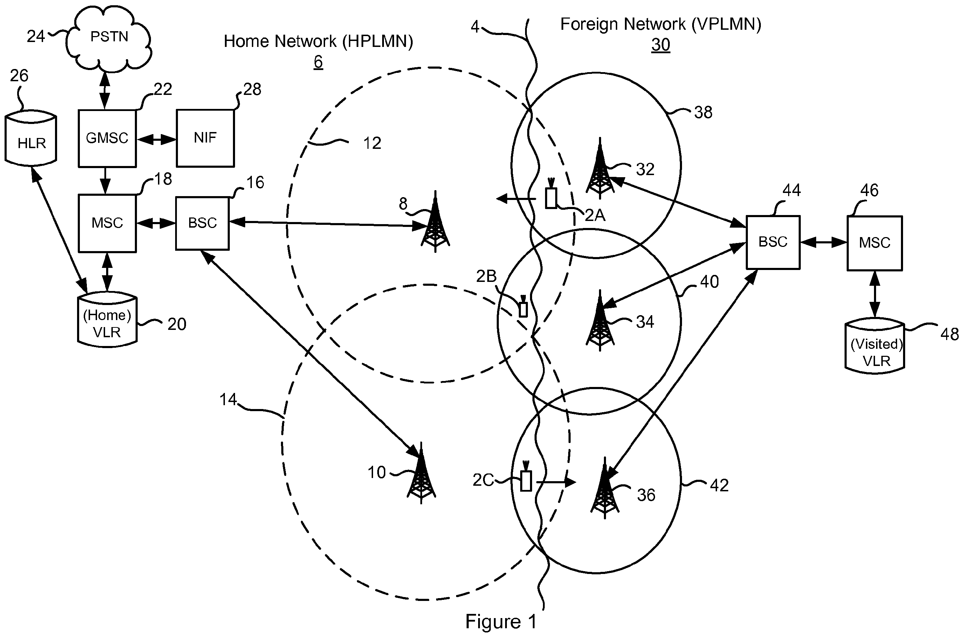

Figure 1 shows three mobile devices 2 that are located near part of a border 4 between two countries. The country hosting the home network 6 (which is operated by the network operator to which each of the mobile devices 2 subscribe) is shown to the left of the border 4. This country is referred to herein as the "home country" of the mobile devices. The home network 6 is also referred to as the Home Public Land Mobile Network (HPLMN) herein.

Part of the network architecture of the home network 6 is shown in Figure 1. Specifically, two base stations 8, 10 are shown, each defining a respective cell having a coverage area 12, 14 illustrated by a dashed line. As known in GSM, the two base stations 8, 10 form part of a Location Area, which is under the control of a Base Station Controller (BSC) 16. The BSC 16 is itself under the control of a Mobile Switching Centre (MSC) 18.

A Visitor Location Register (VLR) 20 is associated with the MSC 18 in the network 6, and this stores information about all mobile devices that are currently registered with any cell under the control of the MSC 18. For clarity purposes only, the VLR 20 of the home network 6 is referred to as the "home VLR 20" in the following description of the invention.

The home network 6 further comprises a gateway MSC (GMSC) 22 that acts as the interface between the home network 6 and a public switched telephone network (PSTN) 24, and that can (although not necessarily) route mobile-to-mobile and PSTN-to-mobile calls through the required MSC(s) in the home network 6.

A Home Location Register (HLR) 26 is provided that stores information for each of the mobile subscribers of the home network 6. This information can include the location of the mobile subscriber (for example in terms of the VLR that it is currently registered with). When a call needs to be routed to a particular mobile subscriber, the GMSC 22 obtains the relevant routing information from the HLR 26. The HLR 26 is also connected to the home VLR 20, which allows the home VLR 20 to obtain information for mobile devices that are attached to the MSC 18 from the HLR 26.

In accordance with an embodiment of the invention, which will be described in more detail below, one or more components, referred to as network interface functions (NIFs) 28, are provided in the home network 6 for performing various functions and operations according to the invention. In particular embodiments, the NIF(s) 28 are part of an implementation of a Customised Applications for Mobile network Enhanced Logic (CAMEL) service in the home network 6, which enables some of the functionality provided by the invention. The components (e.g. NIFs) can be implemented as or by appropriate software or firmware modifications to one or more existing components (for example the HLR 26, GMSC 22, MSC 18, etc.) of the home network 6. The NIF 28 can acts as any one or more of a Signal End Point for MAP, INAP, ISUP and CAP services, an MTP-3 Signal Transfer Point, an SS7 Service Interaction Function, working at SCCP and/or a passive SIGTRAN or TDM monitor, and can routinely connect to HLRs, VLrs, GMSCs and/or IN systems.

A network 30 operated by a different network operator is located in the country to the right of the border 4 (this country is referred to as a foreign country). This network 30 is a foreign network, and the mobile devices 2 can roam to this network 30, if necessary. The network 30 is referred to as the "visited network" or the VPLMN (Visited Public Land Mobile Network) when a mobile device 2 is roaming in that network.

Three base stations 32, 34, 36 that form part of the architecture of the foreign network 30 are shown in Figure 1. Each of the base stations 32, 34, 36 defines a respective cell having a coverage area 38, 40, 42 illustrated by a solid line.

It can be seen that the coverage area 12, 14, 38, 40, 42 of each cell extends across the border 4 into the other country, and that there are areas on both sides of the border 4 in which the coverage of the home network 6 overlaps with the coverage of the foreign network 30.

Similarly to the home network 6, the base stations 32, 34, 36 in the foreign network 30 are under the control of a base station controller (BSC) 44. The BSC 44 is itself under the control of a Mobile Switching Centre (MSC) 46 in the foreign network 30.

A Visitor Location Register (VLR) 48 is associated with the MSC 46 in the network 30, and this stores information about all mobile devices that are currently registered with any cell under the control of the MSC 46 (including, for example, a mobile device 2 belonging to the home network 6 that is roaming in the foreign network 30). For clarity purposes only, the VLR 48 of the foreign network 30 is referred to as the "visited VLR 48" in the following description of the invention.

It will be appreciated that Figure 1 only illustrates a small part of the architecture of each network 6, 30, and that there may be many more MSCs, BSCs, base stations and cells near the border 4 than those shown. In addition, although Figure 1 illustrates the base stations and cells on each side of the border 4 being under the control of a respective base station controller 16 or 44, it will be appreciated that base stations 8 and 10 could be controlled by respective base station controllers within the home network 6, and base stations 32, 34 and 36 could be controlled by respective base station controllers within the foreign network 30. Moreover, it will also be appreciated that there may be multiple networks in each country, each operated by a respective network operator. However, only one of these networks will be the "home network" of the mobile devices 2.

Each of the three mobile devices 2 illustrate one of the roaming problems to be overcome by the invention. Mobile device 2A is located in the foreign country but is moving back towards the home country. As a result of this movement, the mobile device 2A, which is currently registered with the foreign network 30 as a roaming device, has just entered the coverage area 12 of base station 8 in the home network 6. As described above, it is desirable for this device 2A to register with the home network 6 as soon as possible, in order to reduce roaming charges.

Mobile device 2B represents a device that is located in the home country, but near to the border 4, and that is within the coverage area of a cell in both the home network 6

(cell 12) and the foreign network 30 (cell 40). As described above, it is desirable for this device 2B to remain registered with the home network 6 whenever possible, in order to avoid incurring roaming charges.

Mobile device 2C is located in the home country but is moving towards the foreign country. As a result of this movement, the mobile device 2C, which is registered with the home network 6, has just entered the coverage area 42 of base station 36 of the foreign network 30 and is about to cross the border 4 into the foreign country. Although the movement of mobile device 2C will result in the device 2C leaving the coverage area of the home network 6 completely (and therefore becoming a roaming device of the foreign network 30), it is desirable for the device 2C to remain registered with the home network 6 for as long as possible to reduce roaming charges.

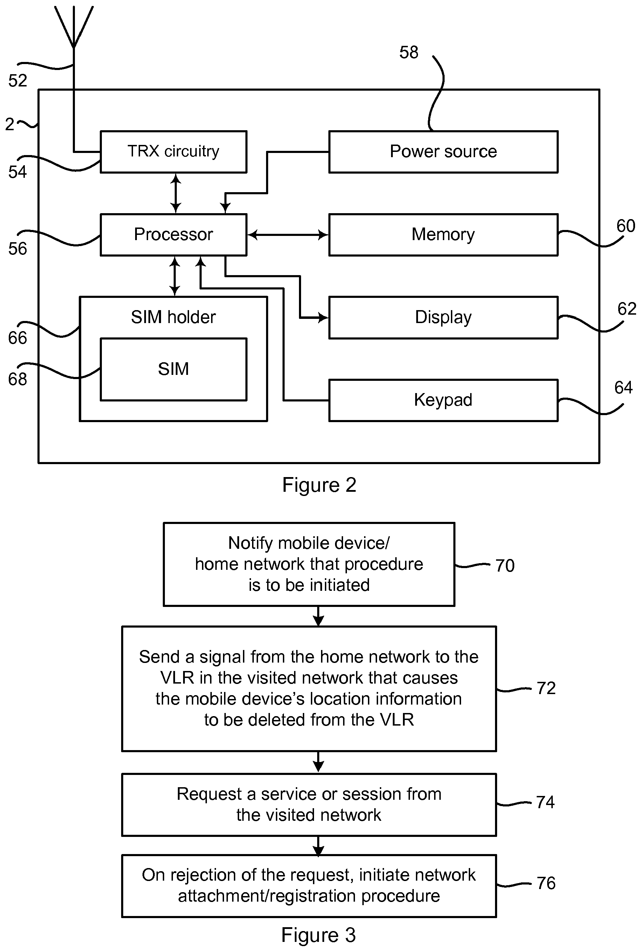

Figure 2 illustrates an exemplary mobile device 2. The mobile device 2 comprises an antenna 52, transceiver circuitry 54, a central processor 56, a power source 58, a memory 60, a display 62, a keypad 64, a network authentication device holder 66 and a removable network authentication device 68. In the following, the network authentication device will be referred to as a SIM or USIM. A mobile device 2 of this type is known in the art, and the function and interaction of each of these elements will be understood to those skilled in the art. Unless otherwise stated, each of these elements operates in a conventional manner, and they will not be described further herein.

The general procedure for initiating or triggering a network registration procedure in a roaming mobile device 2 according to the invention is shown in Figure 3. Firstly, the procedure is initiated (step 70) and the mobile device 2 or home network 6 (as appropriate) is notified. In particular, as described further below, the procedure can be initiated by the mobile device 2 or by the home network 6, depending on the specific circumstances, and the initiating party (i.e. the mobile device 2 or home network 6) informs the other party (i.e. the home network 6 or mobile device 2 respectively) that the procedure is to be initiated.

Then, in step 72, a signal is sent from the home network 6 to the VLR 48 (visited VLR) of the visited network 30 that causes the location information relating to the mobile device 2 to be deleted from the VLR 48. In preferred embodiments, this signal is a MAP Cancel Location signal which is used conventionally to delete the record for a mobile device 2 from a VLR when the mobile device 2 detaches from a cell associated with the VLR and attaches to a cell associated with another VLR (in the same or different network).

Subsequently, the mobile device 2 requests a session or service from the visited network 30 (step 74). The session or service may be a voice or video call, an SMS or MMS message, a data session or an unstructured supplementary service data (USSD) session.

The visited network 30 rejects this request as it has no record of the mobile device 2 in the relevant VLR 48, which causes the mobile device 2 to start a conventional network attachment or registration procedure (step 76).

In particular embodiments of the invention described further below, the procedure shown in Figure 3 can be used when the mobile device 2 is attached to, or otherwise roaming in, a part of the visited network 30 where there may be coverage for the mobile device 2 from the home network 6.

This method has the advantage that, as the registration procedure can be initiated by the home network 6 and it can be completed relatively quickly (for example it can be completed in just a few seconds), it can be attempted when the home network 6 receives a notification that there is an incoming call for the mobile device 2. This means that the mobile device 2 can try to register with the home network 6 before receiving the call and thus avoid the mobile subscriber from incurring unnecessary roaming charges. The same method can be used when a roaming mobile device 2 wishes to place a call or initiate a data session.

A further advantage of this method is that it can allow the mobile device 2 to register with the home network 6 as soon as (or shortly after) coverage from the home network 6 becomes available. Moreover, this method also has the advantage that if the mobile device 2 does attach to a VPLMN 30 while coverage from the home network 6 is temporarily unavailable, the mobile device 2 will reattach to the home network 6 as soon as possible.

In the embodiments of the invention relating to mobile device's roaming in a border region, the mobile device 2 and/or the home network 6 determines whether the mobile device 2 is in part of the visited network 30 in which there may be coverage from the home network 6. In order to do this, information about the architecture and cell structure of the foreign network 30 is required.

To provide this information, and therefore to allow the mobile device 2 and/or home network 6 to operate according to some embodiments of the invention, a (or a number of) probe devices are used to gather information about the architecture and cell structure of foreign networks in an area along the border 2 of two countries (or, more generally, in an area at the edge of the coverage area of the home network 6).

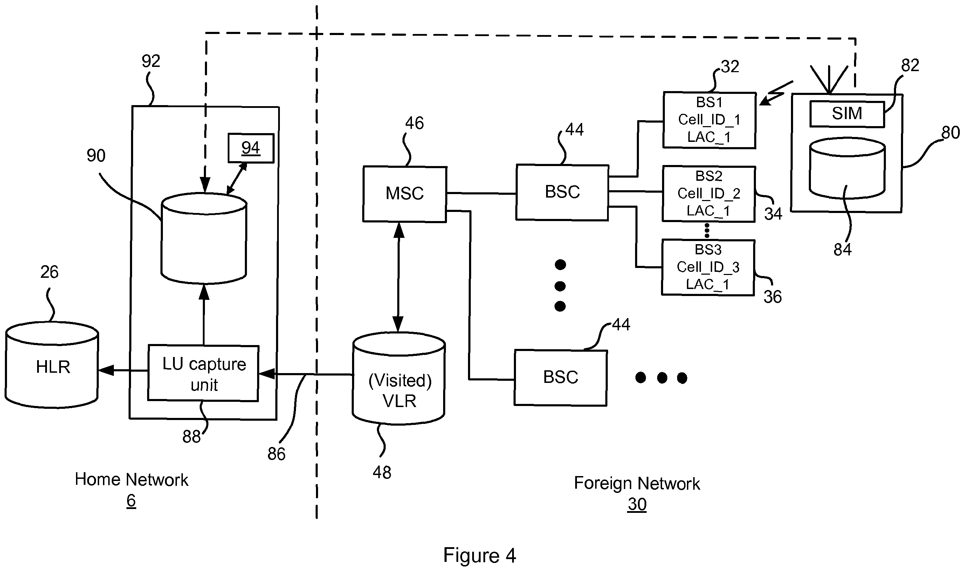

A probe device 80 and various parts of the architecture of the home and foreign networks are shown in Figure 4. The components of the probe device 80 are generally conventional, and can correspond to those shown in the mobile device 2 in Figure 2. In some embodiments, the probe device can correspond to a device as described and shown in any of United Kingdom Patent nos. 2416271, 2416280 or 2413738.

The probe device 80 is moved around in the coverage area of the foreign network 30 near to the border 4 (for example by placing the probe device 80 on a vehicle), and gathers information on each cell (such as cells 38, 40, 42) in the foreign network 30 in which the probe device 80 is located. The probe device 80 also measures and stores information on the strength of any signals from the home network 6 while in cells 38, 40, 42.

The probe device 80 is provided with a subscriber identity module (SIM) 82 for the home network 6, and the probe device 80 performs a registration operation with the foreign network 30. The probe device 80 is forced to manually register with the PLMN of interest (that which the measurements are required for). While the probe device 80 is registered with the foreign network 30 or home network 6, the probe device 80 identifies and stores (in memory 84) the identity of the cell (8, 10, 38, 40 or 42) with which it is communicating, in terms of its Cell ID and Location Area Code (LAC), and also, possibly, the signal strength, and GPS location of the probe device 80 when the measurement is made. The cell is also identified as a high or low probability candidate for having coverage from the home network 6.

As mentioned above, a group of base stations/cells in a network form part of a Location Area, and this Location Area is identified by a Location Area Code that is broadcast to any mobile device communicating with one of those cells in the Location Area.

Whenever the MSC 46 is notified of a new mobile device in its network (such as when the probe device 80 or mobile device 2 registers with the network 30), the MSC 46 adds an appropriate record to the visited VLR 48. On creation of a new record in the VLR 48, the VLR 48 provides a Location Update (LU) signal (shown by arrow 86 in Figure 4) to the home network 6 of the mobile device 2 (or probe device 80).

This Location Update signal is used to update the Home Location Register (HLR) 26 in the home network 6 (which is associated with the GMSC 22), so that the home network 6 knows where its mobile subscriber/device 2 is located.

A Location Update capture unit 88 is placed in the home network 6 such that it can observe signals passing between the HLR 26 and the foreign network VLR 48 and capture the Location Update signals resulting from the operation of the probe device 80. The Location Update capture unit 88 can identify the LU signals resulting from the operation of the probe device 80 by the IMSI or TMSI information associated with the SIM 82 in the probe device 80 that is sent with the LU signal. In a preferred embodiment, the Location Update capture unit 88 is a NIF 28.

The captured Location Update signals are stored by the unit 88 in a database 90. The LU capture unit 88 and database 90 form part of a management module 92 that also includes a controller 94. In addition to being observed by the LU capture unit 88, the Location Update signal passes to the HLR 26.

Thus, while the probe device 80 is gathering the LAC and Cell ID information of the base stations 32, 34, 36 in the VPLMN 30 and the associated coverage information from the HPLMN 6, the Location Update signals resulting from the movement of the probe device(s) 80 are captured by the LU capture unit 88 and stored in the database 90. The information gathered by the probe device(s) 80 can be uploaded to the database 90 and combined with the corresponding Location Update signals so that LAC and Cell ID information is stored with the appropriate VLR address. The Location Updates are used to map the VLR global title, GT, (or SPC in ANSI) to the radio layer LAC and Cell ID gathered by the probe device(s) 80.

The controller 94 can also process the measurements from the probe device 80 to determine an approximate location of each base station 32, 34, 36 in the foreign network 30. The approximate location can be determined from the Cell ID, LAC, signal strength and GPS location of the probe device 80 at each measurement. In particular, the controller 94 can use a weighted triangulation method (weighted using the measured signal strength) to determine the location of the relevant base station 32, 34, 36.

The above process should be repeated for each network that is available at the edge of the coverage area of the home network 6, as, typically, in the border situation illustrated in Figure 1, there will be a number of foreign networks available in the foreign country, each operated by a respective network operator, and it is possible for a roaming subscriber to use any one of those networks.

The above process should also be repeated periodically in order to take account of any changes in the architecture of the foreign network(s) (such as by the introduction or removal of a base station) or in their configuration.

The resulting data stored in the database 90 will provide a map of the coverage provided to mobile devices by the HPLMN 6 and any foreign networks 30 in the relevant border region 4. As indicated above, this coverage and location data will include the SS7 GT address of VLRs 48 in the foreign network 30, as well as the Location Area Codes of BSCs 44 and Cell IDs of base stations 32, 34, 36.

This information can then be used to identify areas where mobile devices 2 may or should be able to attach to the home network 6.

In particular, this information identifies those VLRs 48 in the foreign network 30 that are associated with cells having some overlapping coverage from the HPLMN 6.

In some embodiments of the invention, when a mobile device 2 is attached to, or otherwise roaming in, a visited network 30 (i.e. any network other than the home network 6), the mobile device 2 can use the above information to determine whether it is in part of the visited network 30 in which there may be coverage from the home network 6. In other embodiments of the invention, the home network 6 can use this information to determine whether the mobile device 2 is in part of the visited network 30 in which there may be coverage from the home network 6.

In particular, a list of cells 38, 40, 42 in the VPLMN 30 where there is or may be coverage from the HPLMN 6 can be stored on the SIM or USIM 68 of the mobile device 2, and a program executes on the SIM 68 to determine whether the mobile device 2 is currently located in one of the cells 38, 40, 42 in the list.

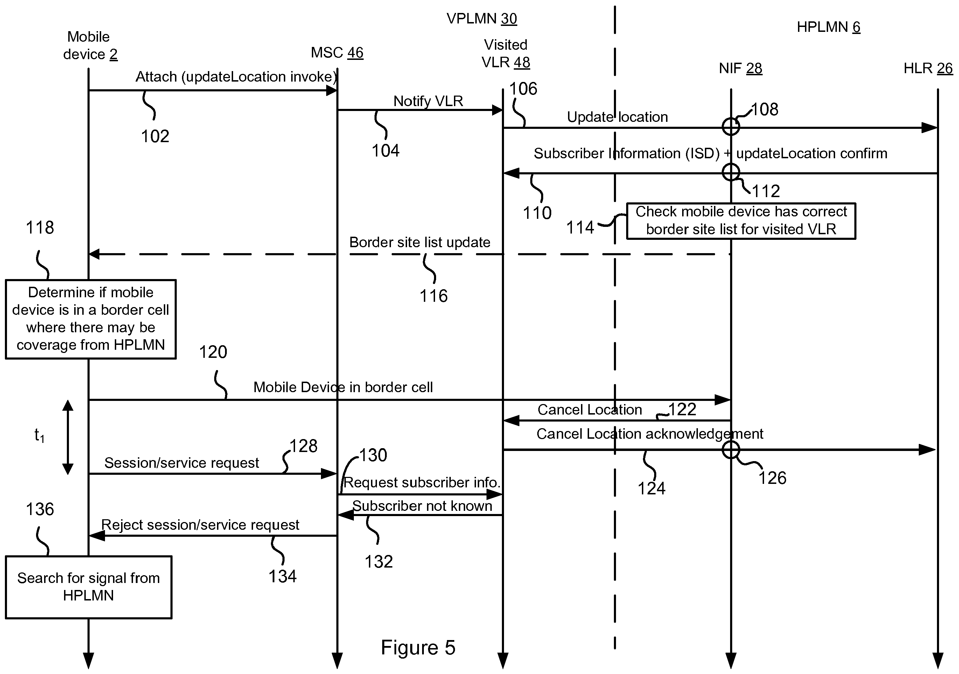

In one embodiment of the invention described with reference to Figure 5 below, if the mobile device 2 is within one of the cells in the list, then the mobile device 2 initiates the reattachment procedure according to the invention so that the mobile device 2 attempts to reattach to the HPLMN 6. This method can also be used when a user of the mobile device 2 wishes to start a session (for example to place a voice or video call, send an SMS or MMS message or send and/or receive data).

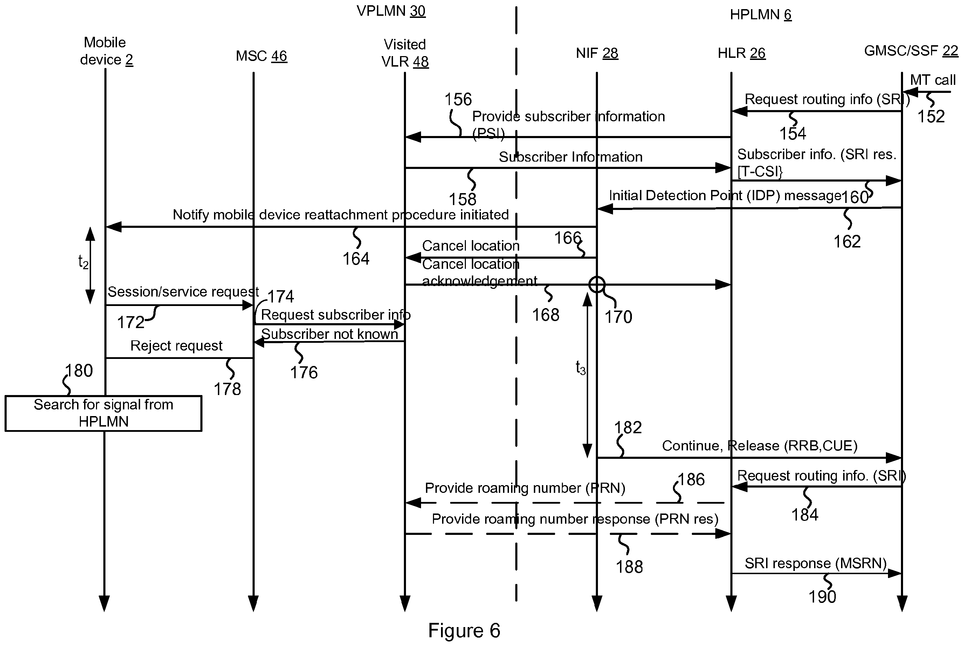

In an alternative embodiment of the invention described with reference to Figure 6 below, if the mobile device 2 is within one of the cells in the list then the HPLMN 6 can initiate the reattachment procedure when there is an incoming call or message for the mobile device 2.

A first embodiment of the invention will now be described with reference to Figure 5, which is a signalling diagram for a method of initiating a network registration procedure for a roaming mobile device 2.

Firstly, the mobile device 2 requests attachment to a cell in the foreign network 30, and this attach request 102 is sent to the mobile switching centre 46 that controls the cell. The attach request 102 can be an updateLocation invoke message. The MSC 46 sends a notification 104 to the VLR 48 indicating that the mobile device 2 wishes to attach to it, and the VLR 48 sends an update location signal 106 to the HLR 26 in the home network 6 to request the information that is required to manage the mobile device 2 while it is roaming in the foreign network 30.

NIF 28 in the home network 6 can observe update location signal 106 as it is sent to the HLR 26 (indicated by circle 108), in the same way as the update location signals sent as a result of movements of the probe device 70 in Figure 4.

In response to the update location signal 106, the HLR 26 retrieves the information for the mobile device/subscriber 2 and sends it to the visited VLR 48. In some embodiments, signal 110 is an Insert Subscriber Data (ISD) signal according to the Mobile Application Part (MAP) protocol within SS7. The HLR 26 also sends an updateLocation confirm message to the visited VLR 48 to indicate that the update location procedure has been completed.

As shown by circle 112, the NIF 28 can also observe signal 110 as it is sent to the visited VLR 48, although this is not necessary for the operation of the invention.

After observing the update location signal 106, if the visited VLR 48 is a VLR that is known to be associated with cells in a border region 4 where there may be coverage from the home network 6 (as determined from the information stored in the database 80 of the management module 82), the NIF 28 checks whether the mobile device 2 has a list of the border cells for the visited VLR 48 stored in its memory 60 or the memory of the SIM 68 (step 114).

The NIF 28 can make this determination by checking it's records to determine if the most recent list of border cells sent to the mobile device 2 is appropriate for the visited VLR 48. If not, the NIF 28 sends an updated list of border cells 116 appropriate to the visited VLR 48 to the mobile device 2. This information is preferably sent to the mobile device 2 as an over-the-air (OTA) update.

Once the mobile device 2 has attached to the cell in the VPLMN 30 (and received an updated border cell list, if necessary), the mobile device 2 can determine whether it is in a border cell where there may or should be coverage from the home network 6 (step 118).

In preferred embodiments, this step is carried out by an application (applet) stored in, and executed by, the SIM 68 in the mobile device 2. In this case, prior to use of the mobile device 2 or SIM 68, a "Location Status Event" (as defined by the 3GPP document "Specification of the SIM Application Toolkit (SAT) for the Subscriber Identity Module - Mobile Equipment (SIM-ME) interface") is added to the mobile device's "Current Event List", which causes the mobile device 2 to inform the SIM 68 of a change or update to the location information (such as when the mobile device 2 attaches to VPLMN 30, or to a new cell or VLR 48 in the VPLMN 30). The SIM applet installed in the SIM 68 checks the location information returned by the Location Status Event against the list of VPLMN border cell sites stored in the memory of the SIM 68. The operation of the SIM applet is triggered by a change or update to the Location Status stored in the SIM 68 as a result of the Location Status Event.

The SIM applet compares the updated or changed Location status (which comprises a Location Area Code and a Cell ID with which the mobile device 2 is communicating) with the list of cells in the VPLMN 30 stored in the memory of the SIM 68.

If the location information does not match a VPLMN cell site stored in the SIM 68 (i.e. the mobile device 2 is not in a cell of the VPLMN 30 that has been identified as having overlapping coverage with the HPLMN 6), it is not possible for the mobile device 2 to reattach to the HPLMN 6. In some embodiments (although not shown in Figure 5), the mobile device 2 can send a message to the NIF 28 at this point indicating that it is not in a cell where there may be coverage from the HPLMN 6.

However, if the mobile device 2 subsequently attaches to a different cell in the foreign network 30 under the control of the same MSC 46, the mobile device repeats step 118 and proceeds as described below if there is a match with one of the cell sites stored in the SIM 68.

In addition, the procedure shown in Figure 5 can be restarted (i.e. from signal 102) if the mobile device 2 attaches to an MSC in the foreign network 30 that is different to MSC 46 (for example as a result of a hand-over as the mobile device 2 moves through the foreign network 30) and that results in an update location signal 106 being sent by the new visited VLR to the HLR 26.

If, in step 118, the location information does match a VPLMN cell site stored in the SIM 68, then the mobile device sends a message 120 to the NIF 28 indicating that it is in a border cell where there may or should be coverage from the HPLMN 6. This message indicates to the NIF 28 that the network reattachment procedure according to the invention can be initiated (this step corresponds to step 70 in Figure 3). Message 120 can be sent in the form of an SMS message, a data packet, or as part of an unstructured supplementary service data (USSD) session.

In some embodiments, this message 120 can include additional information, such as the Cell ID and Location Area Code of it's serving cell (which can be used by the NIF 28 to, for example, assess success rates of reattachment procedures within that border cell), the handset type and capabilities, the geographic location of the mobile device 2 (if a location determining service, such as GPS, is enabled) and/or the storage space available in the memory 60 or SIM/USIM 68 of the mobile device 2 (so that the NIF 28 can size the border cell site list update 116 accordingly).

According to the invention, after receiving signal 120 from the mobile device 2, the NIF 28 sends a signal 122 to the visited VLR 48 that causes the record stored therein relating to the mobile device 2 to be deleted.

In a preferred embodiment, signal 122 is a MAP Cancel Location signal, which is used conventionally to delete the record for a mobile device 2 from a VLR when the mobile device 2 detaches from a cell associated with the VLR and attaches to a cell associated with another VLR (in the same or different network). Conventionally, the Cancel Location signal is sent by the HLR of the mobile device's home network to the relevant VLR.

Thus, on receipt of signal 122, the visited VLR 48 deletes the record relating to the mobile device 2 from its database, and sends an acknowledgement signal 124 to the HLR 26. As indicated by circle 126, the NIF 28 can observe the acknowledgement signal 124 as it is sent to the HLR 26, but this is not necessary for the operation of the invention.

After sending message 120 to the NIF 28, the mobile device 2 waits for a period of time (denoted t₁ in Figure 4) to allow the NIF 28 to send the cancel location signal 122 and for the visited VLR 48 to delete the mobile device's record, and then requests 128 a session or service with the VPLMN 30. Preferably, the period of time t₁ is around 4 seconds (for example between 2 and 6 seconds), although this can be shortened or lengthened according to the preference of a network operator. The request 128 can be sent by the mobile device 2 using the temporary mobile subscriber identity (TMSI) that it was allocated when it attached to the MSC 46 in the VPLMN 30.

On receipt of the request 128, the MSC 46 sends a query 130 (including the TMSI provided by the mobile device 2) to the visited VLR 48 requesting the routing information for the mobile device 2 stored in the VLR 48. As the VLR 48 no longer has any record of the mobile device 2 in its database, the VLR 48 responds to query 130 with a message 132 indicating that the mobile device 2 is not known. This query 130 can be an Access Request message.

The MSC 46 then sends a session or service request rejection 134 to the mobile device. This rejection 134 can be an Immediate Assignment Reject message.

The service request 128 described above can include, for example, the transmission of an SMS message or placing a voice or video call, and the session request 128 described above can include, for example, a data session or a USSD session. It will be appreciated that other types of service or session can be requested without affecting the operation of the invention - all that is required is that the request 128 results in the MSC 46 querying the visited VLR 48 for the information relating to the mobile device 2.

On receipt of the session/service request rejection signal 134, the mobile device 2 starts a conventional location updating procedure in which it searches for a signal from the HPLMN 6 (step 136). One conventional location updating procedure is described in section 4.5.1.1 of 3GPP specification TS 24.008 v7.9.0. In some embodiments, the contents of the EF-loci file in the SIM 68 are deleted to prevent the mobile device 2 from networking to visited networks without undertaking the update location procedure. The contents of this file can be deleted after the mobile device 2 sends message 120 to the NIF 28.

As it is known that there may or should be coverage from the HPLMN 6 at the location of the mobile device 2 (determined in step 118), the location updating procedure in step 136 can result in the mobile device 2 attaching or reattaching to the home network 6.

If the mobile device 2 does not attach to the home network 6 (for example because the mobile device 2 does not detect any signals from the home network 6), the mobile device 2 may reattach to the same cell and MSC 46 in the visited network 30, or to a cell in a different foreign network 30, depending on the signals detected by the mobile device 2 during the location updating procedure and on the networks listed in a preferred list of networks stored in the memory 60 or SIM 68 of the mobile device 2.

In that case, the NIF 28 and mobile device 2 may wait for a predetermined time (for example 30 seconds, or a few minutes) before attempting the reattachment procedure (120-136) again.

The above method can be performed shortly after a mobile device 2 has attached to a cell in a foreign network 30 in which there may be coverage from the HPLMN 6, and/or after a predetermined period of time has elapsed from a previous attempt to attach to the HPLMN 6. Therefore, the mobile device 2 can reattach to the home network 6 almost as soon as good coverage from the home network 6 becomes available.

In addition, as the reattachment procedure can be completed relatively quickly (i.e. in just a few seconds), it can be attempted when the mobile device 2 wants to start a voice call, video call or data session, or send an SMS or MMS message, and thus avoid the mobile subscriber from incurring unnecessary roaming charges. In this case, the mobile device 2/SIM 68 can proceed automatically from step 118 in Figure 5. Alternatively, the user of the mobile device 2 can be asked whether they would like to try and reattach to the home network 6 before starting the call, session or sending the message.

In an advantageous embodiment, the time taken for the location updating procedure in step 136 to be completed can be reduced (in the instance where the mobile device 2 does reattach to the home network 6), by the SIM applet storing the TMSI and other network-specific information (such as cipher keys) that were allocated to the mobile device 2 when it was last attached to the home network 6 and using the stored TMSI and other information to try and reattach to the home network 6. If the TMSI and other information have expired, they can be discarded and a new TMSI applied for.

Figure 6 shows the method used according to a further embodiment of the invention when the HPLMN 6 receives a mobile terminated (MT) call for mobile device 2 which is roaming in VPLMN 30 and registered with visited VLR 48.

The method in Figure 6 is only performed if the mobile device 2 is in a cell of the VPLMN 30 in which there may or should be coverage from the HPLMN 6. In one embodiment, this may be determined by performing steps 102-118 of Figure 5, and the method in Figure 6 will only be executed if the NIF 28 has received a signal from the mobile device 2 indicating that it is in a suitable border cell (for example signal 120). Otherwise, the MT call is handled in a conventional manner.

Therefore, assuming that the mobile device 2 is in a suitable border cell, the procedure according to this embodiment of the invention is as follows.

A notification of the MT call 152 is received at the GMSC/SSF 22 in the home network 6. The GMSC 22 sends a request 154 to the HLR 26 to determine the location and therefore the routing information for the MT call. This signal can be a MAP Send Routing Information (SRI) signal.

In response to request 154 from the GMSC 22, the HLR 26 examines the record for the mobile device 2 and determines that the mobile device 2 is associated with VLR 48 in VPLMN 30. The HLR 26 then sends a signal 156 to the visited VLR 48 requesting information on the specific location of the mobile device 2 (for example the serving Cell ID and LAC). This signal can be a MAP Provide Subscriber Information (PSI) signal.

The visited VLR 48 retrieves the information relating to the mobile device 2 from its database and sends it to the HLR 26 (signal 158).

The HLR 26 forwards the received subscriber and routing information to the GMSC 22 (signal 160), along with a CAMEL 'trigger' that is used to initiate the CAMEL/NIF functionality for this MT call. The HLR 26 can be configured to provide this trigger whenever mobile device 2 is roaming and an MT call is received. Alternatively, NIF 28 can provide this trigger. The signal and CAMEL trigger can be a Terminating CAMEL Subscription Information (T-CSI) signal.

The trigger in signal 160 causes the GMSC 22 to initiate the CAMEL functionality in the home network 6, which is provided, in part, by NIF 28. Thus, the GMSC 22 sends an Initial Detection Point (IDP) signal 162 to the NIF 28.

After sending the IDP signal 162 to the NIF 28, the GMSC 22 suspends the processing of the MT call until it receives an appropriate command from the NIF 28 following the execution of the reattachment procedure according to the invention.

On receipt of the IDP signal 162, the NIF 28 starts the reattachment procedure by sending a message 164 to the mobile device 2 over-the-air (OTA) indicating that the reattachment procedure is to be executed (this step corresponds to step 70 in Figure 3). This message 164 can be, for example, an SMS or MMS message. In some embodiments, the contents of the EF-loci file in the SIM 68 are deleted on receipt of message 164 to prevent the mobile device 2 from networking to visited networks without undertaking the update location procedure.

The reattachment procedure is similar to that described for the first embodiment above. Thus, the NIF 28 sends a signal 166 to the visited VLR 48 that causes the record stored therein relating to the mobile device 2 to be deleted. As in the first embodiment, signal 166 is preferably a MAP Cancel Location signal.

On receipt of signal 166, the visited VLR 48 deletes the record relating to the mobile device 2 from its database, and sends an acknowledgement signal 168 to the HLR 26. As indicated by circle 170, the NIF 28 can observe the acknowledgement signal 168 as it is sent to the HLR 26.

After receiving the message 164 from the NIF 28, the mobile device 2 waits for a period of time (denoted t₂ in Figure 5) to allow the NIF 28 to send the cancel location signal 166 and for the visited VLR 48 to delete the mobile device's record, and then requests 172 a session or service with the VPLMN 30. Preferably, the period of time t₂ is around 4 seconds, although this can be shortened or lengthened according to the preference of a network operator. The request 172 can be sent by the mobile device 2 using the temporary mobile subscriber identity (TMSI) that it was allocated when it attached to the MSC 46 in the VPLMN 30.

On receipt of the request 172, the MSC 46 sends a query 174 (including the TMSI provided by the mobile device 2) to the visited VLR 48 requesting the routing information for the mobile device 2 stored in the VLR 48. As the VLR 48 no longer has any record of the mobile device 2 in its database, the VLR 48 responds to query 174 with a message 176 indicating that the mobile device 2 is not known. This query 174 can be an Access Request message.

The MSC 46 then sends a session or service request rejection 178 to the mobile device 2. This rejection 134 can be an Immediate Assignment Reject message.

As in the first embodiment, the service request 172 described above can include, for example, the transmission of an SMS message or placing a voice or video call, and the session request 172 described above can include, for example, a data session or a USSD session. It will be appreciated that other types of service or session can be requested without affecting the operation of the invention - all that is required is that the request 172 results in the MSC 46 querying the visited VLR 48 for the information relating to the mobile device 2.

On receipt of the session/service request rejection signal 178, the mobile device 2 starts a conventional location updating procedure in which it searches for a signal from the HPLMN 6 (step 180). Again, the conventional location updating procedure can be as described in section 4.5.1.1 of 3GPP specification TS 24.008 v7.9.0.

As it is known that there may or should be coverage from the HPLMN 6 at the location of the mobile device 2 (determined prior to the MT call 154 being received), the location updating procedure in step 180 can result in the mobile device 2 attaching or reattaching to the home network 6.

If the mobile device 2 does not attach to the home network 6 (for example because the mobile device 2 does not detect any signals from the home network 6), the mobile device 2 may reattach to the same cell and MSC 46 in the visited network 30, or to a cell in a different foreign network 30, depending on the signals detected by the mobile device 2 during the location updating procedure and on the networks listed in a preferred list of networks stored in the memory 60 or SIM 68 of the mobile device 2.

In either case, a location update signal will be sent to the HLR 26 in the home network 6 following the completion of the location updating procedure indicating the new location of the mobile device 2.

After sending the cancel location signal 166 or receiving the cancel location acknowledgement 168, the NIF 182 waits for a period of time (denoted t₃ in Figure 6) before taking any further action. t₃ should be long enough for the mobile device 2 to complete steps 172-180 and for the HLR 26 to be updated with the new location of the mobile device 2, without being too long that the calling party of the MT call experiences a substantial delay before the call is dealt with. t₃ can be around 4 seconds (for example between 2 and 6 seconds).

Then, NIF 28 sends a command 182 to the GMSC 22 indicating the action to be taken in respect of the MT call 154.

In one embodiment (shown in Figure 6), the command 182 includes a Continue command (CUE) which instructs the GMSC 22 to resume setting up the MT call with the mobile device 2; and this is done in a conventional manner, which includes sending a new request for routing information (SRI) 184 to the HLR 26 in order to find out the mobile station roaming number (MSRN) of the mobile device 2. The command 182 can also include a Request Report BCSM (Basic Call State Model), RRB, signal which is a CAMEL message that allows control of the terminating call by NIF 28 and in this case suspends the processing of the call while other procedures, for example a cancel procedure, are initiated.

At this stage, the NIF 28 does not know whether the reattachment procedure was successful (i.e. the mobile device 2 reattached to the home network 6), and the Continue command 182 is therefore sent regardless of whether the mobile device 2 has reattached to the home network 6, attached to a different foreign network or reattached to the same cell in the foreign network 30. Alternatively, the NIF 28 (or another NIF in the home network 6) can observe the location update signal sent to the HLR 26 following the location updating procedure (as it is done in the probing operation illustrated in Figure 4), so the NIF 28 can find out whether the reattachment procedure was successful.

In the conventional call set up process, on receipt of signal 184, the HLR 26 sends a request 186 to the mobile device's VLR for information on the specific location of the mobile device 2 (for example the MSRN). Request 186 can be a Provide Roaming Number (PRN) message. The response 188 by the mobile device's VLR to the request 186 includes all the information required for the GMSC 22 to route the MT call (for example the MSRN).

The HLR 26 sends this information to the GMSC 22 in response to request 184. This signal 190 can be an SRI response that includes the MSRN. The GMSC 22 can now route the MT call to the mobile device 2.

It should be noted that signals 186 and 188 in Figure 6 are shown as being sent to and received from the visited VLR 48, which assumes that the mobile device 2 has not reattached to the home network 6. However, it will be appreciated that if the mobile device 2 has reattached to the home network 6, the HLR 26 will direct signal 186 to the VLR in the home network 6 (for example home VLR 20) that the mobile device 2 is associated with according to the information stored in the HLR 26 following the location updating procedure.

Although in the embodiments described above the mobile device 2 or HPLMN 6 determines whether the mobile device 2 is in a cell in the visited network 30 in which there may be or is coverage from the HPLMN 6 by comparing the current serving cell identity to a list of cell identities where coverage from the HPLMN 6 is expected, it will be appreciated that in alternative embodiments of the invention the mobile device 2 can obtain a measurement of its location using a satellite positioning system receiver (such as GPS) and this location measurement can be used to determine if the mobile device 2 is in a location where there is or is likely to be coverage from the HPLMN 6. The mobile device 2 can compare this location measurement to a locally-stored list of locations where there may be coverage from the HPLMN 6, or alternatively the location measurement can be sent to the HPLMN 6 by the mobile device 2 which performs the comparison using a database in the network 6.

Thus, the solutions described above allow mobile devices 2 to return to the HPLMN 6 much quicker than the conventional procedures, and also allow the reattachment procedure to be attempted when an MT call is received by the mobile device's home network.

Although the embodiments presented above illustrate the application of the invention to a roaming mobile device 2 that is in a region where there may be coverage from the home network 6, it will be appreciated that the procedure shown in Figure 3 can be used to initiate a network registration procedure in any roaming mobile device 2 (i.e. a mobile device 2 that is anywhere in the visited network 30, not just in a border region where there may be coverage from the home network 6). In these embodiments, the procedure can be used to move a roaming mobile device 2 to, for example, a more preferred roaming partner of the home network 6, if coverage from that network is available.

Although the invention has been described in terms of a SIM applet that is to be loaded into a SIM for a mobile device and a NIF located in the home network, it will be appreciated by those skilled in the art that the invention can be implemented in alternative ways. For example, the processor in the mobile device could be configured to execute the steps performed by the SIM applet, a mobile application could be written that causes the mobile device 2 to execute the steps performed by the SIM applet and/or the functionality of the NIF 28 can be integrated directly into one or more components of the home network 6, such as the GMSC and/or HLR.

While the invention has been illustrated and described in detail in the drawings and foregoing description, such illustration and description are to be considered illustrative or exemplary and not restrictive; the invention is not limited to the disclosed embodiments.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program, such as the SIM applet, may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of operating a mobile device (2) that is attached to a network (30) other than the home network (6) of the mobile device (2), wherein location information for the mobile device (2) in said other network (30) is stored in a visitor location register (48), VLR, in said other network (30), the method in the mobile device (2) comprising:
sending a request for a service or session (128, 172) to said other network (30) on expiry of a time period from a first signal (120, 164) sent from the mobile device (2) to the home network (6) or sent from the home network (6) to the mobile device (2) that indicates that a network reattachment procedure is to be initiated as the mobile device (2) is in a part of said other network (30) where there may be coverage from a more preferred network than said other network (30), the time period being sufficiently long to allow a second signal to be sent from the home network (6) to the VLR (48) in said other network (30) to cause the location information for the mobile device (2) to be deleted from the VLR (48) in said other network (30) and for the location information for the mobile device (2) to be deleted from the VLR (48) in said other network (30); and
on receiving a rejection (134, 178) of that request (128, 172) from said other network (30), initiating a network reattachment procedure in which the mobile device (2) searches for signals from the home network or a more preferred network and reattaches to a network based on the result of the search.

2. A method of initiating a network reattachment procedure by a mobile device (2), the method comprising:
operating the mobile device (2) as claimed in claim 1; and
in response to the first signal (120, 164), sending the second signal (122, 166) from the home network (6) to the VLR (48) in said other network (30).

3. A method as claimed in claim 2, wherein the second signal (122, 166) sent from the home network (6) to the VLR (48) in said other network (30) is sent by a network interface function (28) in the home network.

4. A method as claimed in claim 1, 2 or 3, wherein the mobile device (2) uses information from a previous attachment to the home network (6) in the network reattachment procedure.

5. A method as claimed in any preceding claim, further comprising the step of:
determining whether the mobile device (2) is in a part of said other network (30) where there may be coverage from the more preferred network (6).

6. A method as claimed in claim 5, wherein the step of determining comprises the mobile device (2) comparing the location of the mobile device (2) to a set of locations in said other network (30) in which there may be coverage from the more preferred network (6).

7. A method as claimed in claim 6, wherein the step of comparing comprises the mobile device (2) comparing an identifier of a cell in said other network (30) with which the mobile device (2) is communicating to a set of identifiers of cells in said other network (30) in which there may be coverage from the more preferred network (6).

8. A method as claimed in claim 5, 6 or 7, wherein, if it is determined that the mobile device (2) is in a part of said other network (30) where there may be coverage from the more preferred network (6), the method comprises sending the first signal (120) from the mobile device to the more preferred network indicating that the mobile device (2) is in a part of said other network (30) where there may be coverage from the more preferred network (6).

9. A method as claimed in any of claims 5 to 8, wherein the step of determining whether the mobile device (2) is in a part of said other network (30) where there may be coverage from the more preferred network (6) is performed in the event that a user of the mobile device (2) wants to use a service or start a session.

10. A method as claimed in claim 5, 6 or 7 when dependent on claim 2, wherein, if it is determined that the mobile device (2) is in a part of said other network (30) where there may be coverage from the more preferred network (6) and a call is received at the home network (6) for the mobile device (2), the method further comprises the step of:
suspending the processing of the call in the home network; and
sending the first signal (164) from the home network to the mobile device.

11. A method as claimed in claim 10, further comprising the step of resuming the processing of the call in the home network (6) after the mobile device (2) performs the network reattachment procedure.

12. A method as claimed in any of claims 1-11, wherein the more preferred network (6) is the home network (6) of the mobile device (2).

13. A method as claimed in any of claims 1-11, wherein the more preferred network (6) is the home network (6) of the mobile device (2) or a more preferred roaming partner of the home network (6).

14. A computer program product comprising computer readable code that, when executed by a mobile device (2) or a processor within a SIM or USIM in a mobile device, is configured to cause the mobile device or processor to perform the steps in the method of claim 1.

15. A mobile device (2) for use in a network, wherein when the mobile device (2) is attached to a network (30) other than the home network (6) of the mobile device (2) and location information is stored in a visitor location register (48), VLR, of said other network (30), the mobile device (2) is configured to:
send a request for a service or session (128, 172) to said other network on expiry of a time period from a first signal (120, 164) sent from the mobile device (2) to the home network (6) or from the home network (6) to the mobile device (2) that indicates that a network reattachment procedure is to be initiated as the mobile device (2) is in a part of said other network (30) where there may be coverage from a more preferred network than said other network (30), the time period being sufficiently long to allow a second signal to be sent from the home network (6) to the VLR (48) in said other network (30) to cause the location information for the mobile device (2) to be deleted from the VLR (48) in said other network (30) and for after the location information for the mobile device (2) to be deleted from the VLR (48) in said other network (30); and
on receiving a rejection of that request from said other network (30), initiate a network reattachment procedure in which the mobile device (2) searches for signals from the home network or a more preferred network and reattaches to a network based on the result of the search.

16. A system, comprising:
a mobile device (2) as claimed in claim 15; and
a network element in the home network (6) of the mobile device (2), wherein the network element is configured to:
send the first signal (120, 164) to the mobile device (2) or receive the first signal (120, 164) from the mobile device (2);
send the second signal to the VLR (48) in said other network (30) to cause the location information for the mobile device (2) to be deleted from the VLR (48) in said other network in response to the first signal (120, 164) sent to the mobile device (2) or received from the mobile device (2).

## Patentansprüche

1. Arbeitsweise eines Mobilgeräts (2), das an ein Netzwerk (30) angeschlossen ist, das nicht das Heimnetzwerk (6) des Mobilgeräts (2) ist, wobei die Standortinformationen des Mobilgeräts (2) im anderen Netzwerk (30) in einem Besucher-Standortregister (BSR) (48) des anderen Netzwerks (30) gespeichert werden, wobei das Verfahren im mobilen Gerät (2) umfasst:
nach Ablauf einer bestimmten Zeitdauer (nachdem ein erstes Signal (120, 164) vom Mobilgerät (2) an das Heimnetzwerk (6) gesendet wurde oder vom Heimnetzwerk (6) an das Mobilgerät (2) gesendet wurde) eine Session- oder Service-Anforderung (128, 172) an das andere Netzwerk (30) senden, wobei das Signal anzeigt, dass eine Netzwerkwiederherstellungsprozedur eingeleitet werden muss, weil sich das Mobilgerät (2) in einem Teil des anderen Netzwerks (30) befindet, das möglicherweise von einem bevorzugteren Netzwerk als dem anderen Netzwerk (30) abgedeckt wird, wobei die Zeitdauer ausreichend lang ist, damit ein zweites Signal vom Heimnetzwerk (6) an das BSR (48) im anderen Netzwerk (30) gesendet werden kann, um zu veranlassen, dass die Standortinformationen für das Mobilgerät (2) aus dem BSR (48) im anderen Netzwerk (30) gelöscht werden, und um die Standortinformationen für das Mobilgerät (2) aus dem BSR (48) im anderen Netzwerk (30) zu löschen; und
beim Empfang einer Zurückweisung (134, 178) dieser Anforderung (128, 172) durch das andere Netzwerk (30) wird eine Netzwerkwiederherstellungsprozedur eingeleitet, bei der das Mobilgerät (2) nach Signalen vom Heimnetzwerk oder einem bevorzugteren Netzwerk sucht und anhand des Ergebnisses der Suche eine neue Verbindung mit einem Netzwerk herstellt.

2. Verfahren zum Einleiten einer Netzwerkwiederherstellungsprozedur durch ein mobiles Gerät (2), wobei das Verfahren umfasst:
das Mobilgerät (2) gemäß Anspruch 1 betreiben; und
als Reaktion auf das erste Signal (120, 164) das zweites Signal (122, 166) vom Heimnetzwerk (6) an das BSR (48) im anderen Netzwerk (30) senden.

3. Verfahren gemäß Anspruch 2, wobei das vom Heimnetzwerk (6) an das BSR (48) im anderen Netzwerk (30) gesendete zweite Signal (122, 166) durch eine Netzwerkschnittstellenfunktion (28) im Heimnetzwerk gesendet wird.

4. Verfahren gemäß Anspruch 1, 2 oder 3, wobei das Mobilgerät (2) in der Netzwerkwiederherstellungsprozedur Informationen aus einer früheren Verbindung mit dem Heimnetzwerk (6) verwendet.

5. Verfahren gemäß einem der vorhergehenden Ansprüche, ferner folgenden Schritt umfassend:
bestimmen, ob sich das Mobilgerät (2) in einem Teil des anderen Netzwerks (30) befindet, das möglicherweise durch das bevorzugtere Netzwerk (6) abgedeckt wird.

6. Verfahren gemäß Anspruch 5, wobei der Schritt des Bestimmens umfasst, dass das Mobilgerät (2) den Standort des Mobilgeräts (2) mit einem Standort-Satz im anderen Netzwerk (30) vergleicht, in dem möglicherweise Abdeckung durch das bevorzugtere Netzwerk (6) besteht.

7. Verfahren gemäß Anspruch 6, wobei der Schritt des Vergleichens umfasst, dass das Mobilgerät (2) die Funkzellenkennung im anderen Netzwerk (30), mit dem das Mobilgerät (2) kommuniziert, mit einem Funkzellenkennungssatz im anderen Netzwerk (30) vergleicht, in dem möglicherweise Abdeckung durch das bevorzugtere Netzwerk (6) besteht.

8. Verfahren gemäß Anspruch 5, 6 oder 7, wobei, falls festgestellt wird, dass sich das Mobilgerät (2) in einem Teil des anderen Netzwerks (30) befindet, das möglicherweise von einem bevorzugteren Netzwerk (6) abgedeckt wird, das Verfahren umfasst, das erste Signal (120) vom mobilen Gerät an das bevorzugtere Netzwerk zu senden, welches anzeigt, dass sich das Mobilgerät (2) in einem Teil des anderen Netzwerks (30) befindet, das möglicherweise von dem bevorzugteren Netzwerk (6) abgedeckt wird.

9. Verfahren gemäß einem der Ansprüche 5 bis 8, wobei der Schritt des Bestimmens, ob sich das Mobilgerät (2) in einem Teil des anderen Netzwerks (30) befindet, das möglicherweise von dem bevorzugteren Netzwerk (6) abgedeckt wird, dann durchgeführt wird, wenn ein Benutzer des Mobilgeräts (2) einen Dienst nutzen oder eine Session beginnen möchte.

10. Verfahren gemäß Anspruch 5, 6 oder 7, sofern von Anspruch 2 abhängend, wobei das Verfahren, falls festgestellt wird, dass sich das Mobilgerät (2) in einem Teil des anderen Netzwerks (30) befindet, das möglicherweise von dem bevorzugteren Netzwerk (6) abgedeckt wird und ein Anruf im Heimnetzwerk (6) für das Mobilgerät (2) empfangen wird, ferner folgenden Schritt umfasst:
die Verarbeitung des Anrufs im Heimnetzwerk aussetzen; und
das erste Signal (164) vom Heimnetzwerk an das Mobilgerät senden.

11. Verfahren gemäß Anspruch 10, ferner den Schritt umfassend, die Verarbeitung des Anrufs im Heimnetzwerk (6) wieder aufzunehmen, nachdem das Mobilgerät (2) die Netzwerkwiederherstellungsprozedur durchgeführt hat.

12. Verfahren gemäß einem der Ansprüche 1 bis 11, wobei das bevorzugtere Netzwerk (6) das Heimnetzwerk (6) des Mobilgeräts (2) ist.

13. Verfahren gemäß einem der Ansprüche 1 bis 11, wobei das bevorzugtere Netzwerk (6) das Heimnetzwerk (6) des Mobilgeräts (2) oder ein bevorzugterer Roaming-Partner des Heimnetzwerks (6) ist.

14. Computerprogrammprodukt, umfassend computerlesbaren Code, der so konfiguriert ist, dass das Mobilgerät oder der Prozessor die Schritte des Verfahrens gemäß Anspruch 1 ausführt, wenn er von einem Mobilgerät (2) oder einem Prozessor in einem SIM oder in einem USIM in einem Mobilgerät ausgeführt wird.

15. Mobilgerät (2) zur Verwendung in einem Netzwerk, wobei das Mobilgerät (2) folgendermaßen ausgelegt ist, falls das Mobilgerät (2) an ein anderes Netzwerk (30) als das Heimnetzwerk (6) des Mobilgeräts (2) angeschlossen ist und Standortinformationen in einem Besucher-Standortregister (BSR) (48) des anderen Netzwerks (30) gespeichert sind:
nach Ablauf einer bestimmten Zeitdauer nachdem ein erstes Signal (120, 164) vom Mobilgerät (2) an das Heimnetzwerk (6) oder vom Heimnetzwerk (6) an das Mobilgerät (2) gesendet wurde, eine Session- oder Service-Anforderung (128, 172) an das andere Netzwerk senden, wobei das Signal anzeigt, dass eine Netzwerkwiederherstellungsprozedur eingeleitet werden muss, weil sich das Mobilgerät (2) in einem Teil des anderen Netzwerks (30) befindet, das möglicherweise von einem bevorzugteren Netzwerk als dem anderen Netzwerk (30) abgedeckt wird, wobei die Zeitdauer ausreichend lang ist, damit ein zweites Signal vom Heimnetzwerk (6) an das BSR (48) im anderen Netzwerk (30) gesendet werden kann, um zu veranlassen, dass die Standortinformationen für das Mobilgerät (2) aus dem BSR (48) im anderen Netzwerk (30) gelöscht werden können, und um anschließend die Standortinformationen für das Mobilgerät (2) aus dem BSR (48) im anderen Netzwerk (30) zu löschen; und
beim Empfang einer Zurückweisung dieser Anforderung durch das andere Netzwerk (30) eine Netzwerkwiederherstellungsprozedur einleiten, bei der das Mobilgerät (2) nach Signalen vom Heimnetzwerk oder einem bevorzugteren Netzwerk sucht und anhand des Ergebnisses der Suche eine neue Verbindung mit einem Netzwerk herstellt.

16. System, umfassend:
ein Mobilgerät (2) gemäß Anspruch 15; und
ein Netzwerkelement im Heimnetzwerk (6) des Mobilgeräts (2), wobei das Netzwerkelement dafür ausgelegt ist:
das erste Signal (120, 164) an das Mobilgerät (2) zu senden oder das erste Signal (120, 164) vom Mobilgerät (2) zu empfangen;
das zweite Signal an das BSR (48) im anderen Netzwerk (30) zu senden, um zu veranlassen, dass die Standortinformationen des Mobilgeräts (2) aus dem BSR (48) im anderen Netzwerk gelöscht werden, als Reaktion darauf, dass das erste Signal (120, 164) an das Mobilgerät (2) gesendet oder vom Mobilgerät (2) empfangen wurde.

## Revendications

1. Un procédé de fonctionnement d'un appareil mobile (2) qui est rattaché à un réseau (30) autre que le réseau domestique (6) de l'appareil mobile (2), dans lequel les informations de localisation pour l'appareil mobile (2) dans ledit autre réseau (30) sont stockées dans un enregistreur de localisation des visiteurs (48), VLR, dans ledit autre réseau (30), le procédé dans l'appareil mobile (2) comprenant :
l'envoi d'une demande de service ou de session (128, 172) audit autre réseau (30) à l'expiration d'une période de temps à partir d'un premier signal (120, 164) envoyé à partir de l'appareil mobile (2) vers le réseau domestique (6) ou envoyé à partir du réseau domestique (6) vers l'appareil mobile (2) qui indique qu'une procédure de réattachement à un réseau doit être initiée car l'appareil mobile (2) est dans une partie dudit autre réseau (30) où il peut y avoir une couverture à partir d'un réseau plus préféré que ledit autre réseau (30), la période de temps étant suffisamment longue pour permettre l'envoi d'un deuxième signal à partir du réseau domestique (6) vers le VLR (48) dans ledit autre réseau (30) pour amener les informations de localisation pour l'appareil mobile (2) à être supprimées du VLR (48) dans ledit autre réseau (30) et pour supprimer les informations de localisation pour l'appareil mobile (2) du VLR (48) dans ledit autre réseau (30) ; et
à la réception d'un rejet (134, 178) de cette demande (128, 172) à partir dudit autre réseau (30), l'initiation d'une procédure de réattachement à un réseau dans laquelle l'appareil mobile (2) recherche des signaux à partir du réseau domestique ou d'un réseau plus préféré et se réattache à un réseau sur la base du résultat de la recherche.

2. Un procédé d'initiation d'une procédure de réattachement à un réseau par un appareil mobile (2), le procédé comprenant :
le fonctionnement de l'appareil mobile (2) selon la revendication 1 ; et
en réponse au premier signal (120, 164), l'envoi du deuxième signal (122, 166) à partir du réseau domestique (6) vers le VLR (48) dans ledit autre réseau (30).

3. Un procédé selon la revendication 2, dans lequel le deuxième signal (122, 166) envoyé à partir du réseau domestique (6) vers le VLR (48) dans ledit autre réseau (30) est envoyé par une fonction d'interface réseau (28) dans le réseau domestique.

4. Un procédé selon la revendication 1, 2 ou 3, dans lequel l'appareil mobile (2) utilise les informations à partir d'un rattachement précédent au réseau domestique (6) dans la procédure de réattachement au réseau.

5. Un procédé selon l'une quelconque des revendications précédentes, comprenant en outre l'étape consistant à :
déterminer si l'appareil mobile (2) est dans une partie dudit autre réseau (30) où il peut y avoir une couverture à partir du réseau plus préféré (6).

6. Un procédé selon la revendication 5, dans lequel l'étape de détermination comprend l'appareil mobile (2) comparant la localisation de l'appareil mobile (2) à un ensemble de localisations dans ledit autre réseau (30) dans lequel il peut y avoir une couverture à partir du réseau plus préféré (6).

7. Un procédé selon la revendication 6, dans lequel l'étape de comparaison comprend l'appareil mobile (2) comparant un identificateur d'une cellule dans ledit autre réseau (30) avec lequel l'appareil mobile (2) communique à un ensemble d'identificateurs de cellules dans ledit autre réseau (30) dans lequel il peut y avoir une couverture à partir du réseau plus préféré (6).

8. Un procédé selon la revendication 5, 6 ou 7, dans lequel, s'il est déterminé que l'appareil mobile (2) est dans une partie dudit autre réseau (30) où il peut y avoir une couverture à partir du réseau plus préféré (6), le procédé comprend l'envoi du premier signal (120) à partir de l'appareil mobile vers le réseau plus préféré, indiquant que l'appareil mobile (2) est dans une partie dudit autre réseau (30) où il peut y avoir une couverture à partir du réseau plus préféré (6).

9. Un procédé selon l'une quelconque des revendications 5 à 8, dans lequel l'étape consistant à déterminer si l'appareil mobile (2) est dans une partie dudit autre réseau (30) où il peut y avoir une couverture à partir du réseau plus préféré (6) est effectuée dans le cas où un utilisateur de l'appareil mobile (2) souhaite utiliser un service ou démarrer une session.

10. Un procédé selon la revendication 5, 6 ou 7 lorsqu'il y a dépendence de la revendication 2, dans lequel, s'il est déterminé que l'appareil mobile (2) est dans une partie dudit autre réseau (30) où il peut y avoir une couverture à partir du réseau plus préféré (6) et qu'un appel est reçu au niveau du réseau domestique (6) pour l'appareil mobile (2), le procédé comprend en outre l'étape consistant à :
suspendre le traitement de l'appel dans le réseau domestique ; et
envoyer le premier signal (164) à partir du réseau domestique vers l'appareil mobile.

11. Un procédé selon la revendication 10, comprenant en outre l'étape consistant à reprendre le traitement de l'appel dans le réseau domestique (6) après que l'appareil mobile (2) a effectué la procédure de réattachement au réseau.

12. Un procédé selon l'une quelconque des revendications 1 à 11, dans lequel le réseau plus préféré (6) est le réseau domestique (6) de l'appareil mobile (2).

13. Un procédé selon l'une quelconque des revendications 1 à 11, dans lequel le réseau plus préféré (6) est le réseau domestique (6) de l'appareil mobile (2) ou un partenaire d'itinérance plus préféré du réseau domestique (6).

14. Un produit de programme informatique comprenant un code lisible par ordinateur qui, lorsqu'il est exécuté par un appareil mobile (2) ou un processeur dans une carte SIM ou USIM dans un appareil mobile, est configuré pour amener l'appareil mobile ou le processeur à effectuer les étapes dans le procédé selon la revendication 1.

15. Un appareil mobile (2) pour utilisation dans un réseau, dans lequel lorsque l'appareil mobile (2) est rattaché à un réseau (30) autre que le réseau domestique (6) de l'appareil mobile (2) et que les informations de localisation sont stockées dans un enregistreur de localisation des visiteurs (48), VLR, dudit autre réseau (30), l'appareil mobile (2) est configuré pour :
envoyer une demande de service ou de session (128, 172) audit autre réseau à l'expiration d'une période de temps à partir d'un premier signal (120, 164) envoyé à partir de l'appareil mobile (2) vers le réseau domestique (6) ou à partir du réseau domestique (6) vers l'appareil mobile (2) qui indique qu'une procédure de réattachement à un réseau doit être initiée car l'appareil mobile (2) est dans une partie dudit autre réseau (30) où il peut y avoir une couverture à partir d'un réseau plus préféré que ledit autre réseau (30), la période de temps étant suffisamment longue pour permettre l'envoi d'un deuxième signal à partir du réseau domestique (6) vers le VLR (48) dans ledit autre réseau (30) pour amener les informations de localisation pour l'appareil mobile (2) à être supprimées du VLR (48) dans ledit autre réseau (30) et pour ensuite supprimer les informations de localisation pour l'appareil mobile (2) du VLR (48) dans ledit autre réseau (30) ; et
à la réception d'un rejet de cette demande à partir dudit autre réseau (30), initier une procédure de réattachement à un réseau dans laquelle l'appareil mobile (2) recherche des signaux à partir du réseau domestique ou d'un réseau plus préféré et se réattache à un réseau sur la base du résultat de la recherche.

16. Un système, comprenant :
un appareil mobile (2) selon la revendication 15 ; et
un élément de réseau dans le réseau domestique (6) de l'appareil mobile (2), dans lequel l'élément de réseau est configuré pour :
envoyer le premier signal (120, 164) vers l'appareil mobile (2) ou recevoir le premier signal (120, 164) à partir de l'appareil mobile (2) ;
envoyer le deuxième signal vers le VLR (48) dans ledit autre réseau (30) pour amener les informations de localisation pour l'appareil mobile (2) à être supprimées du VLR (48) dans ledit autre réseau en réponse au premier signal (120, 164) envoyé vers l'appareil mobile (2) ou reçu à partir de l'appareil mobile (2).
